# EUROPEAN PATENT APPLICATION

(11) **EP 4 831 354 A1**
(43) Date of publication of application: **28.10.2026**
(21) Application number: 24908018.5
(22) Date of filing: 17.12.2024
(51) Int. Cl.: C25B 11/093, C25B 11/061, C25B 1/04

(54) **ELECTROCHROMIC DEVICE**

(30) Priority: 22.12.2023 KR 20230189711
(71) Applicant: Dongjin Semichem Co., Ltd., Incheon 22824 (KR)
(72) Inventor: KIM, Young Mi, Seongnam-si, Gyeonggi-do 13486 (KR); YANG, Hoe Taek, Seongnam-si, Gyeonggi-do 13486 (KR)
(74) Representative: Grünecker Patent- und Rechtsanwälte PartG mbB
(86) International application number: PCT/KR2024/020509
(87) International publication number: WO 2025/135735

(57) **Abstract**

An embodiment of the present invention provides a catalyst composition comprising: a catalyst comprising a platinum group element; and a support comprising a post-transition metal and a metal oxide. In addition, other embodiments of the present invention provide: an anode comprising the catalyst composition; and water electrolysis comprising the anode.

## Description

### Technical Field

The disclosure relates to an electrochromic device.

### Background Art

A material which undergoes reversible changes in color due to electrochemical oxidation-reduction reactions due to the phenomenon of reversible color change according to the direction of an electric field in a case where a voltage is applied by an external power source is referred to as an electrochromic material. The electrochromic material is characterized by displaying color or decolorizing in response to an electrical signal applied from outside or the absence of an electrical signal.

A typical electrochromic device includes an electrochromic (EC) electrode layer and a counter electrode (CE) layer, and these layers are separated by an ionically conductive layer which is highly resistant to electrons but highly conductive to ions.

Electrochromic devices may be formed by various methods, in which, for example, methods which include layer formation processes using adsorption have problems of complex manufacturing processes and increased costs and have limitations in that such electrochromic devices are not applicable to flexible devices because of high-temperature heat treatments required.

Furthermore, solution-based methods which use an electrochromic material dissolved in an electrolyte solution have limitations in terms of precise control capability and stability improvement of devices.

### Disclosure of Invention

### Technical Problem

The disclosure is intended to provide a catalyst composition which includes a catalyst and a support including a post-transition metal and a metal oxide.

### Solution to Problem

The novel catalyst composition of the disclosure may include a catalyst and a support including a post-transition metal and a metal oxide, wherein the catalyst may include a platinum group element.

### Advantageous Effects of Invention

The catalyst composition according to the disclosure has the advantages of being economical due to the reduced noble metal catalyst content as well as being stable and highly conductive.

### Brief Description of Drawings

FIG. 1 is a diagram schematically illustrating a catalyst composition according to an embodiment of the disclosure.
FIG. 2 is a diagram illustrating results of evaluating the performance of the catalyst composition according to an embodiment of the disclosure.

### Best Mode for Carrying out the Invention

An embodiment of the disclosure provides a catalyst composition including a catalyst and a support including a post-transition metal and a metal oxide, wherein the catalyst includes a platinum group element.

In an embodiment of the disclosure, the platinum group element may include Ir, Ru, Rh, Pd, Os, Re, Au, or Pt.

In an embodiment of the disclosure, the post-transition metal may include a Group 13 element.

In an embodiment of the disclosure, the post-transition metal may include Ga, In, Al, or B.

In an embodiment of the disclosure, the metal oxide may include an oxide of a transition metal.

In an embodiment of the disclosure, the metal oxide may include an oxide of one or more metals selected from Ti, Sn, W, Ta, Si, Co, Ni, Nb, Zn, Mo, Mn, Cr, V, Cu, Zr, Fe, Bi, and Sb.

In an embodiment of the disclosure, the first post-transition metal may be doped into the metal oxide at 0.1 to 20 mol%.

In an embodiment of the disclosure, the support may have a particle size of 5 to 500 nm.

In an embodiment of the disclosure, the relationship between the particle size x of the catalyst composition and the platinum group element content y of the catalyst may be expressed by the following Expression 1:

[Expression 1] $y \geq 175 {x}^{- 0.471} ,$
where the unit of x is nm and the unit of y is wt%.

In an embodiment of the disclosure, the specific surface area of the support may be 5 to 200 m2/g.

Another embodiment of the disclosure provides an anode including the catalyst composition.

Another embodiment of the disclosure provides a water electrolysis including the anode.

### Mode for the Invention

Embodiments of the disclosure are illustrated in the accompanying drawings. However, the creative concept of the disclosure may be embodied in many different forms and should not be construed as being limited to the embodiments described herein. Rather, these embodiments are provided to ensure that this disclosure will be thorough and complete, and will fully convey the scope of the creative concept of the disclosure to those having ordinary knowledge in the art. Like reference numerals refer to like elements.

The terminologies used herein are intended to describe particular embodiments only and are not intended to limit the creative concept of the disclosure. The singular forms as used herein are intended to include the plural forms such as "at least one," unless the context clearly indicates otherwise. "At least one" should not be construed as being limited to a singular form. The term "and/or" as used herein includes any combination of one or more of the listed items. The terms "comprise (or include)" and/or "comprising (or including)" as used herein specify the presence of specified features, regions, integers, steps, operations, elements and/or components, and do not exclude the presence or addition of one or more other features, regions, integers, steps, operations, elements, components and/or groups thereof.

As used herein, referring to an object being "on" another object includes not only a case where the object is directly on the other object, but also a case where an intervening object is between the two objects.

Throughout the specification, referring to a part being "connected (joined, contacted, coupled)" to another part includes not only a case where the part is "directly connected" but also a case where the part is "indirectly connected" to the other member with an intervening member being between the two parts.

Unless otherwise defined, all terms (including technical and scientific terms) used herein have the same meaning as commonly understood by those having ordinary knowledge in the art to which the disclosure belongs. It will be further understood that terms, such as those defined in commonly used dictionaries, should be interpreted consistently with their meaning in the context of the relevant art and the disclosure, rather than in an idealized or overly formal sense.

Although specific embodiments are described, alternatives, modifications, variations, improvements, and substantial equivalents which are not currently unpredicted or unpredictable may occur to the applicant or those having ordinary knowledge in the art. Therefore, the appended claims, which may be applied and changed, are intended to include all such alternatives, modifications, variations, improvements and substantial equivalents.

In the following embodiments, the terms, such as first, second, etc., are only used to distinguish one element from another element, rather than in a limiting sense.

In the following embodiments, the singular forms include the plural forms as well, unless the context clearly indicates otherwise.

In the drawings, the sizes of components may be exaggerated or reduced for ease of description. For example, the size and thickness of each element are shown arbitrarily in the drawings for ease of description, and thus the disclosure is not necessarily limited to what is shown.

In a case where an embodiment may be implemented differently, a specific process order may differ from the order described. For example, two processes described as occurring consecutively may be performed substantially simultaneously or in an order inverse to the order described.

A catalyst composition according to an embodiment of the disclosure may include a catalyst and a support including a post-transition metal and a metal oxide.

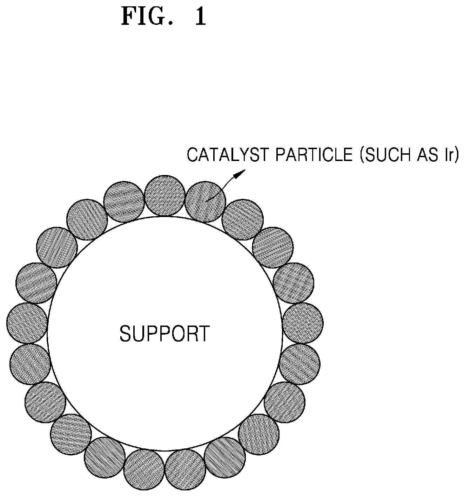

FIG. 1 is a diagram schematically illustrating a catalyst composition according to an embodiment of the disclosure.

According to FIG. 1, the catalyst composition according to an embodiment of the disclosure may include a catalyst and a support.

The catalyst may include a transition metal, and the transition metal may include a platinum group element, but is not limited thereto.

The platinum group element may include Ir, Ru, Rh, Pd, Os, Re, Au, or Pt, but the disclosure is not particularly limited, and a platinum group element capable of serving as a catalyst may be used. According to an embodiment of the disclosure, the platinum group element may be Ir or Ru.

The post-transition metal may include a Group 13 element, and specifically may include Ga, In, Al, or B, but is not limited thereto.

The metal oxide may include an oxide of a transition metal. Specifically, the metal oxide may include an oxide of one or more metals selected from Ti, Sn, W, Ta, Si, Co, Ni, Nb, Zn, Mo, Mn, Cr, V, Cu, Zr, Fe, Bi, and Sb, but is not limited thereto. According to an embodiment of the disclosure, the metal oxide may be an oxide of Ti.

The post-transition metal may be in a form doped into the metal oxide, and may be doped at 0.1 to 20 mol%, 0.1 to 15 mol%, 0.1 to 10 mol%, 0.1 to 5 mol%, 0.1 to 1 mol%, 0.1 to 0.5 mol%, 0.5 to 20 mol%, 0.5 to 15 mol%, 0.5 to 10 mol%, 0.5 to 5 mol%, 0.5 to 1 mol%, 1 to 20 mol%, 1 to 15 mol%, 1 to 10 mol%, 1 to 5 mol%, 5 to 20 mol%, 5 to 15 mol%, 5 to 10 mol%, 10 to 20 mol%, 10 to 15 mol%, or 15 to 20 mol%, but is not limited thereto.

The particle size of the support may be 5 to 500 nm, 5 to 400 nm, 5 to 300 nm, 5 to 200 nm, 5 to 100 nm, 5 to 50 nm, 5 to 20 nm, 10 to 500 nm, 10 to 400 nm, 10 to 300 nm, 10 to 200 nm, 10 to 100 nm, 10 to 50 nm, 10 to 20 nm, 20 to 500 nm, 20 to 400 nm, 20 to 300 nm, 20 to 200 nm, 20 to 100 nm, 20 to 50 nm, 50 to 500 nm, 50 to 400 nm, 50 to 300 nm, 50 to 200 nm, 50 to 100 nm, 100 to 500 nm, 100 to 400 nm, 100 to 300 nm, 100 to 200 nm, 200 to 500 nm, 200 to 400 nm, 200 to 300 nm, 300 to 500 nm, 300 to 400 nm, or 400 to 500 nm, but is not limited thereto.

The specific surface area decreases as in the particle size of the support increases, and in the disclosure, the relationship between the support particle size and the catalyst content may improve performance within a range that satisfies the conditions of the following formula. The following relationship as shown in Expression 1 may be established between the particle size x of the catalyst composition and the platinum group element content y of the catalyst:
[Expression 1] $y \geq 175 {x}^{- 0.471} ,$
wherein the unit of x is nm and the unit of y is wt%.

The specific surface area of the support may be 5 to 200 m2/g, 5 to 150 m2/g, 5 to 100 m2/g, 5 to 50 m2/g, 10 to 200 m2/g, 10 to 150 m2/g, 10 to 100 m2/g, 10 to 50 m2/g, 50 to 200 m2/g, 50 to 150 m2/g, 50 to 100 m2/g, 100 to 200 m2/g, 100 to 150 m2/g, or 150 to 200 m2/g, but is not limited thereto.

The morphology of the support may be spherical, cubic, tubular, rod-like, spherical, hollow spherical, or plate-like, but the disclosure is not particularly limited, and a structure capable of serving as a support may be used.

The catalyst composition may be represented by the following Chemical Formula 1:

[Chemical Formula 1] Mₐ@N_{b}-L_{100-b}

In Chemical Formula 1 above,
M is a metal oxide or alloy including one or more platinum group elements,
N includes a post-transition metal,
L is a metal oxide,
a and b are rational numbers, respectively and independently,
M may include one or more of Ir, Ru, Rh, Pd, Os, Re, Au, or Pt, but the disclosure is not particularly limited, and a metal capable of serving as a catalyst may be used. According to an embodiment of the disclosure, M may be Ir or Ru.
N may include Ga, In, Al, or B, but is not limited thereto.
L may include an oxide of one or more metals selected from Ti, Sn, W, Ta, Si, Co, Ni, Nb, Zn, Mo, Mn, Cr, V, Cu, Zr, Fe, Bi, and Sb, but is not limited thereto. According to an embodiment of the disclosure, L may be an oxide of Ti.
a may be a rational number from 1 to 10, 1 to 5, or 1 to 3, but is not limited thereto. b may be a rational number from 0.1 to 20, 0.1 to 10, 0.1 to 5, or 0.1 to 3, but is not limited thereto. According to an embodiment of the disclosure, a may be 1.
@ may mean that a catalyst is formed on the surface of the support.

Another embodiment of the disclosure provides an electrode including the catalyst composition and a water electrolysis including the same.

The electrode including the catalyst composition may be applied to either one or both of an anode and a cathode. According to an embodiment of the disclosure, the electrode including the catalyst composition may be an anode.

The catalyst composition may be applied in the same as, or modified, from the aforementioned embodiment as needed, and more detailed description thereof is omitted.

Hereinafter, the disclosure will be described in detail based on examples and experimental examples.

However, the following examples and experimental examples are merely specific illustrations of the disclosure from one aspect, and the disclosure is not limited thereto.

### <Example> Preparation of Catalyst Composition

### Preparation of Support

Titanium isopropoxide, gallium nitrate, EtOH, DIW, and acetic acid were added to a beaker and stirred. After sufficient stirring, heat was applied at 80°C to form a white precipitate. The white precipitate was separated and washed using centrifugation. After drying in an oven, heat treatment was performed to obtain a support.

### Preparation of Catalyst Composition

The prepared support, hydrogen hexachloroiridate hydrate, sodium nitrate, and IPA were added into a beaker and stirred. After sufficient stirring, brown particles were obtained through heat treatment at 80°C. After obtaining the brown particles, additional heat treatment at 350°C was performed, followed by surface cleaning and drying in an oven to obtain the catalyst.

### <Experimental Example 1> Performance Evaluation with Introduction of Ga Support

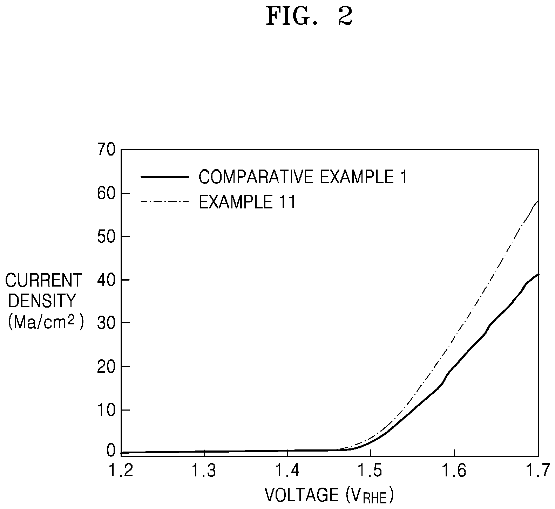

The performance of the catalyst composition prepared according to an example of the disclosure was evaluated by introducing a Ga support to the catalyst composition. After 2 µL of the catalyst composition dispersed was dropped on an electrode, the electrode was connected to RDE equipment. 0.1M HClO₄ was used as the electrolyte, and LSV was measured at 1.2 to 1.7V. The evaluation results are shown in Table 1 below and FIG. 2.

**[Table 1]**

| Category | Catalyst Composition | Support | Catalyst Content (%) | Performance (@1.6V) |
|---|---|---|---|---|
| Comparative Example 1 | IrOx | X | 90 | 20 |
| Comparative Example 2 | IrOx@TiO₂ | ○ | 65 | 20 |
| Comparative Example 3 | IrOx@SnO₂ | ○ | 65 | 20.4 |
| Example 1 | IrOx@Ga-TiO₂ | ○ | 65 | 24 |
| Example 11 | IrOx@Ga-TiO₂ | ○ | 45 | 26.6 |

In Table 1, comparing Comparative Example 1 and Comparative Example 2 reveals that the catalyst content decreased with the introduction of the support. Unlike the comparative examples, in a case where a Ga support was introduced as in Example 1 or Example 11, it may be seen that the performance was remarkably improved by approximately 20% and 33% or more, respectively.

### <Experimental Example 2> Performance Evaluation according to Ga Support Content

The performance of the catalyst composition prepared according to an example of the disclosure was evaluated according to the content of the Ga support. The performance evaluation method is the same as in Experimental Example 1 above, and the evaluation results are shown in Table 2 below.

**[Table 2]**

| Category | Catalyst Composition | Ga Content (mol%) | Noble Metal of Catalyst Content (%) | Performance (@1.6V) |
|---|---|---|---|---|
| Example 2 | | 0.03 | | 20 |
| Example 3 | | 0.1 | | 20.4 |
| Example 4 | IrOx@Ga-TiO₂ | 0.5 | 65 | 20.6 |
| Example 5 | | 1 | | 212 |
| Example 6 | | 3 | | 23.1 |
| Example 1 | | 5 | | 24 |
| Example 7 | | 10 | | 22.3 |
| Example 8 | | 20 | | 20.5 |
| Example 9 | | 25 | | 18.1 |

Referring to Table 2 above, it may be seen that all examples showed high performance, and in particular, performance was significantly improved with a Ga content of 3 to 10 mol%.

### <Experimental Example 3> Performance Evaluation according to Support Particle Size, Specific Surface Area, and Catalyst Content

The performance of the catalyst composition prepared according to an example of the disclosure was evaluated according to the support particle size, specific surface area, and catalyst content. The performance evaluation method was the same as in Experimental Example 1 above, and the evaluation results are shown in Table 3 below.

**[Table 3]**

| Category | Particle Size (nm) | Specific Surface Area (m2/g) | Noble Metal of Catalyst Content (wt%) | Performance (@1.6V) |
|---|---|---|---|---|
| Example 10 | 10 | 151 | 80 | 23.5 |
| Example 10-1 | | | 60 | 22.4 |
| Example 10-2 | | | 45 | 15.9 |
| Example 1 | 15 | 93 | 65 | 24 |
| Example 1-1 | | | 50 | 23.5 |
| Example 1-2 | | | 35 | 15 |
| Example 11 | 50 | 29 | 45 | 26.6 |
| Example 11-1 | | | 30 | 26.2 |
| Example 11-2 | | | 20 | 18.8 |
| Example 12 | 100 | 15 | 30 | 24 |
| Example 12-1 | | | 20 | 23.7 |
| Example 12-2 | | | 15 | 17.3 |
| Example 13 | | | 25 | 24 |
| Example 13-1 | 200 | 8 | 15 | 22.8 |
| Example 13-2 | | | 10 | 16.7 |

In Table 3 above, the catalyst composition of the examples was IrOx@Ga-TiO₂, and it may be seen that the specific surface area decreases as the particle size of the support increases. At this time, the presence of a minimum catalyst content for showing excellent performance depending on the particle size was confirmed. As a result of analyzing the relationship between the particle size x illustrating excellent performance and the platinum group element content y of the catalyst, the following Expression 1 was derived as a relational expression. [Expression 1] $y \geq {175 x}^{- 0.471} .$

### <Experimental Example 4> Performance Evaluation according to Catalyst Type

The performance of the catalyst composition prepared according to an example of the disclosure was evaluated according to the type of the catalyst. The performance evaluation method is the same as Experimental Example 1 above, and the evaluation results are shown in Table 4 below.

**[Table 4]**

| Category | Catalyst Composition | Noble Metal Content of Catalyst (wt%) | Performance (@1.6V) |
|---|---|---|---|
| Comparative Example 1 | IrOx | 90 | 20 |
| Example 14 | Ru@Ga-TiO₂ | 65 | 24.6 |
| Example 1 | IrOx@Ga-TiO₂ | 65 | 24 |

Referring to Table 4 above, in a case where the catalyst is Ir or Ru, it may be seen that the performance was improved by about 20% or more compared to Comparative Example 1. This confirms that the performance of the catalyst composition according to the disclosure was improved with the introduction of a novel support, despite the catalyst content being 65 wt%.

### <Experimental Example 5> Performance Evaluation according to Support Type

The performance of the catalyst composition prepared according to an example of the disclosure was evaluated according to the type of the support. The performance evaluation method is the same as in Experimental Example 1 above, and the evaluation results are shown in Table 5 below.

**[Table 5]**

| Category | Catalyst Composition | Doping Content (mol%) | Noble Metal Content of Catalyst (wt%) | Performance (@1.6V) |
|---|---|---|---|---|
| Example 6 | IrOx@Ga-TiO₂ | 3 | | 23.1 |
| Example 1 | | 5 | | 24 |
| Example 15 | IrOx@In-TiO₂ | 3 | | 22.4 |
| Example 16 | | 5 | 65 | 22.1 |
| Example 17 | IrOx@B-TiO₂ | 5 | | 22.5 |
| Example 18 | IrOx@Al-TiO₂ | 5 | | 23 |
| Example 19 | IrOx@In-SnO₂ | 10 | | 21 |

Referring to Table 5 above, it may be seen that excellent performance is maintained even though the doping contents of transition metals and/or post-transition metals in the support are changed. This confirms that excellent performance is achieved in a case where a catalyst composition is prepared according to an embodiment of the disclosure, particularly in a case where Ga, In, B, and Al are used for supports.

The foregoing description of the disclosure is for illustrative purposes, and those having ordinary knowledge in the art to which the disclosure belongs will understand that the disclosure may be easily modified into other specific forms without departing from the technical spirit or essential characteristics of the disclosure. Therefore, the embodiments described above should be understood as illustrative rather than restrictive in all respects. For example, each element described as a singular form may be implemented in a distributed manner, and similarly, elements described as being distributed may also be implemented in a combined form.

The scope of the disclosure is defined by the claims described below, and all changes or modifications derived from the meaning and scope of the claims and equivalent concepts thereof should be interpreted as being included in the scope of the disclosure.

## Claims

1. A catalyst composition comprising: a catalyst; and
a support comprising a post-transition metal and a metal oxide,
wherein the catalyst comprises a platinum group element.

2. The catalyst composition of claim 1,
wherein the platinum group element comprises Ir, Ru, Rh, Pd, Os, Re, Au, or Pt.

3. The catalyst composition of claim 1,
wherein the post-transition metal comprises a Group 13 element.

4. The catalyst composition of claim 1,
wherein the post-transition metal comprises Ga, In, Al, or B.

5. The catalyst composition of claim 1,
wherein the metal oxide comprises an oxide of a transition metal.

6. The catalyst composition of claim 1,
wherein the metal oxide comprises an oxide of one or more metals selected from Ti, Sn, W, Ta, Si, Co, Ni, Nb, Zn, Mo, Mn, Cr, V, Cu, Zr, Fe, Bi, and Sb.

7. The catalyst composition of claim 1,
wherein the post-transition metal is doped into the metal oxide at 0.1 to 20 mol%.

8. The catalyst composition of claim 1,
wherein the support has a particle size of 5 to 500 nm.

9. The catalyst composition of claim 1,
wherein the catalyst composition has a particle size x and the platinum group element of the catalyst has a content y, which have a relationship represented by following Expression 1: [Expression 1] $y \geq 175 {x}^{- 0.471} ,$
wherein the unit of x is nm, and the unit of y is wt%.

10. The catalyst composition of claim 1,
wherein a specific surface area of the support is 5 to 200 m2/g.

11. An anode comprising the catalyst composition of any one of claims 1 to 10.

12. A water electrolysis comprising the anode of claim 11.
